# EUROPEAN PATENT APPLICATION

(11) **EP 4 748 502 A1**
(43) Date of publication of application: **27.05.2026**
(21) Application number: 24864008.8
(22) Date of filing: 07.03.2024
(51) Int. Cl.: B05C 13/02, B05C 9/14, B05C 11/10

(54) **COATING SYSTEM AND METHOD**

(30) Priority: 12.09.2023 CN 202311171192
(71) Applicant: Contemporary Amperex Technology Co., Limited, Ningde, Fujian 352100 (CN)
(72) Inventor: WU, Kai, Ningde, Fujian 352100 (CN); TU, Yinhang, Ningde, Fujian 352100 (CN); MA, Yunfei, Ningde, Fujian 352100 (CN)
(74) Representative: Ziebig Hengelhaupt Intellectual Property Attorneys Patentanwaltskanzlei PartGmbB
(86) International application number: PCT/CN2024/080627
(87) International publication number: WO 2025/055281

(57) **Abstract**

Disclosed are a coating system and a coating method. The coating system includes: a first detector (4), a second detector (5), a control device, and a deviation correction device, where the first detector (4) is configured to detect first coating information of a first surface of a substrate; the second detector (5) is configured to detect second coating information of a second surface of the substrate, the first surface being one surface of the substrate, and the second surface being the other surface of the substrate; the control device is configured to calculate a deviation value for both sides of the first surface and the second surface according to the first coating information and the second coating information, and send a deviation correction instruction to the deviation correction device according to the deviation value; and the deviation correction device is configured to perform coating deviation correction on the substrate according to the deviation correction instruction.

## Description

The present application claims priority to Chinese Patent Application No. 202311171192.8, entitled "COATING SYSTEM AND METHOD", filed with the China National Intellectual Property Administration on September 12, 2023, the entire content of which is incorporated herein by reference.

### TECHNICAL FIELD

The present application relates to the technical field of batteries, and in particular, to a coating system and a coating method.

### BACKGROUND

Currently, in the coating process during lithium battery production, the deviation value for the substrate is typically calculated using a single-reference method. Due to the influence of the wide width of the electrode plate, this method suffers from significant calculation errors and poor deviation correction effects.

### SUMMARY

In view of the above problem, the present application provides a coating system and a coating method, which aim to resolve the issue in existing coating deviation correction methods where the deviation value for the substrate is typically calculated using a single-reference method, resulting in significant calculation errors and poor deviation correction effects due to the influence of the wide width of the electrode plate.

In a first aspect, the present application provides a coating system, including: a first detector, a second detector, a control device, and a deviation correction device, where
the first detector is configured to detect first coating information of a first surface of a substrate;
the second detector is configured to detect second coating information of a second surface of the substrate, the first surface being one surface of the substrate, and the second surface being the other surface of the substrate;
the control device is configured to calculate a deviation value for both sides of the first surface and the second surface according to the first coating information and the second coating information, and send a deviation correction instruction to the deviation correction device according to the deviation value; and
the deviation correction device is configured to perform coating deviation correction on the substrate according to the deviation correction instruction.

In the technical solution of the embodiments of the present application, the deviation value for both sides of the first surface and the second surface is calculated according to the first coating information of the first surface of the substrate and the second coating information of the second surface, and coating deviation correction is performed according to the deviation value. Compared to existing methods that calculate the deviation value for the substrate using a single-reference method, since this embodiment calculates a deviation value for both sides of the first surface and the second surface using a dual-reference method, the calculation error caused by the wide width of the electrode plate is thereby reduced, thus improving the deviation correction effects and enhancing the product yield rate.

In some embodiments, the coating system further includes: an unwinding device, a coating device, and a winding device, the coating device being disposed between the unwinding device and the winding device, and the first detector and the second detector being disposed between the coating device and the winding device, where
the coating device is configured to coat the first surface and the second surface of the substrate.

In the technical solution of the embodiments of the present application, the first surface and the second surface of the substrate are coated through double-sided coating, thereby enabling improvement in the coating efficiency.

In some embodiments, the coating device includes a first-surface coating device and a second-surface coating device, the first-surface coating device being disposed at an unwinding position of the unwinding device, and the second-surface coating device being disposed between the first-surface coating device and the winding device, where
the first-surface coating device is configured to coat the first surface of the substrate; and
the second-surface coating device is configured to coat the second surface of the substrate.

In the technical solution of the embodiments of the present application, a first-surface coating device and a second-surface coating device are separately provided, where the first-surface coating device is configured to coat the first surface of the substrate, and the second-surface coating device is configured to coat the second surface of the substrate, thereby enabling improvement in the product yield rate.

In some embodiments, the coating system further includes: a deviation corrector, the deviation corrector being disposed between the first-surface coating device and the second-surface coating device, and the deviation correction device being the deviation corrector and/or the second-surface coating device, where
the deviation corrector is configured to adjust a position of the substrate according to the deviation correction instruction to perform deviation correction on the substrate; and
the second-surface coating device is configured to coat the second surface of the substrate according to the deviation correction instruction to perform coating deviation correction on the substrate.

In the technical solution of the embodiments of the present application, coating deviation correction is performed on the substrate through the deviation corrector and/or the second-surface coating device, thereby enabling improvement in the deviation correction effects or enabling reduction in the coating deviation correction cost.

In some embodiments, the coating system further includes a drying device, the drying device being disposed between the first-surface coating device and the second-surface coating device, and also being disposed between the second-surface coating device and the winding device, where
the drying device is configured to dry the first surface and the second surface of the substrate.

In the technical solution of the embodiments of the present application, the drying device is disposed between the first-surface coating device and the second-surface coating device, and is also disposed between the second-surface coating device and the winding device, thereby enabling drying of both the first surface and the second surface of the substrate without the need to set up a plurality of drying devices, and thus enabling reduction in the coating drying costs.

In some embodiments, the first detector and the second detector are disposed between the drying device and the winding device, where
the first detector is configured to detect a first-surface dry-film image of the first surface of the substrate;
the second detector is configured to detect a second-surface dry-film image of the second surface of the substrate; and
the control device is configured to calculate the deviation value for both sides of the first surface and the second surface according to the first-surface dry-film image and the second-surface dry-film image, and send the deviation correction instruction to the deviation correction device according to the deviation value.

In the technical solution of the embodiments of the present application, the deviation value for both sides of the first surface and the second surface is calculated by means of image comparison, that is, the deviation value for both sides of the first surface and the second surface is calculated according to the first-surface dry-film image and the second-surface dry-film image, thereby enabling improvement in the accuracy of the deviation value.

In some embodiments, the coating system further includes: a third detector, the third detector being disposed between the second-surface coating device and the drying device, the first detector being disposed between the drying device and the second-surface coating device, and the second detector being disposed between the drying device and the winding device, where
the third detector is configured to detect a second-surface wet-film image of the second surface of the substrate; and
the control device is configured to calculate a drying compensation value according to the second-surface wet-film image and the second-surface dry-film image, calculate the deviation value for both sides of the first surface and the second surface according to the drying compensation value, the first-surface dry-film image, and the second-surface wet-film image, and send the deviation correction instruction to the deviation correction device according to the deviation value.

In the technical solution of the embodiments of the present application, a third detector is additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

In some embodiments, the control device is further configured to calculate a single-frame deviation value for both sides between the first surface and the second surface according to the drying compensation value, the first-surface dry-film image, and the second-surface wet-film image, and accumulate single-frame picture heights to obtain an accumulated distance; in response to the accumulated distance satisfying a preset distance condition, calculate an average deviation value of a plurality of single-frame deviation values within the accumulated distance; calculate a deviation correction closed-loop value according to the average deviation value and a deviation correction coefficient; and in response to the deviation correction closed-loop value satisfying a preset deviation correction condition, send the deviation correction instruction to the deviation correction device according to the deviation correction closed-loop value.

In the technical solution of the embodiments of the present application, before performing deviation correction, it is also determined whether the accumulated distance of a plurality of frame picture heights satisfies a preset distance condition, and whether the deviation correction closed-loop value satisfies a preset deviation correction condition, thereby enabling improvement in the accuracy of coating deviation correction.

In some embodiments, the control device is further configured to acquire an empirical compensation value for the substrate before and after drying of the second surface; and calculate the deviation value for both sides of the first surface and the second surface according to the empirical compensation value, the first-surface dry-film image, and the second-surface wet-film image, and send the deviation correction instruction to the deviation correction device according to the deviation value.

In the technical solution of the embodiments of the present application, the deviation value for both sides of the first surface and the second surface is calculated according to the empirical compensation value for the substrate before and after drying of the second surface, the first-surface dry-film image, and the second-surface wet-film image, thereby enabling improvement in the coating deviation correction efficiency and reduction in the coating system cost.

In a second aspect, the present application provides a coating method, including:
detecting first coating information of a first surface of a substrate by a first detector;
detecting second coating information of a second surface of the substrate by a second detector, the first surface being one surface of the substrate, and the second surface being the other surface of the substrate; and
calculating a deviation value for both sides of the first surface and the second surface according to the first coating information and the second coating information, and sending a deviation correction instruction to a deviation correction device according to the deviation value to cause the deviation correction device to perform coating deviation correction on the substrate according to the deviation correction instruction.

In the technical solution of the embodiments of the present application, the deviation value for both sides of the first surface and the second surface is calculated according to the first coating information of the first surface of the substrate and the second coating information of the second surface, and coating deviation correction is performed according to the deviation value. Compared to existing methods that calculate the deviation value for the substrate using a single-reference method, since this embodiment calculates a deviation value for both sides of the first surface and the second surface using a dual-reference method, the calculation error caused by the wide width of the electrode plate is thereby reduced, thus improving the deviation correction effects and enhancing the product yield rate.

In some embodiments, the coating method further includes:
detecting a first-surface dry-film image of the first surface of the substrate by the first detector;
detecting a second-surface dry-film image of the second surface of the substrate by the second detector; and
calculating the deviation value for both sides of the first surface and the second surface according to the first-surface dry-film image and the second-surface dry-film image, and sending the deviation correction instruction to the deviation correction device according to the deviation value to cause the deviation correction device to perform coating deviation correction on the substrate according to the deviation correction instruction.

In the technical solution of the embodiments of the present application, the deviation value for both sides of the first surface and the second surface is calculated by means of image comparison, that is, the deviation value for both sides of the first surface and the second surface is calculated according to the first-surface dry-film image and the second-surface dry-film image, thereby enabling improvement in the accuracy of the deviation value.

In some embodiments, the coating method further includes:
detecting a second-surface wet-film image of the second surface of the substrate by a third detector; and
calculating a drying compensation value according to the second-surface wet-film image and the second-surface dry-film image, and calculating the deviation value for both sides of the first surface and the second surface according to the drying compensation value, the first-surface dry-film image, and the second-surface wet-film image, and sending the deviation correction instruction to the deviation correction device according to the deviation value to cause the deviation correction device to perform coating deviation correction on the substrate according to the deviation correction instruction.

In the technical solution of the embodiments of the present application, a third detector is additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

In a third aspect, the present application provides a coating method, including:
acquiring first coating information of a first surface of a substrate and second coating information of a second surface of the substrate, the first surface being one surface of the substrate, and the second surface being the other surface of the substrate; and
calculating a deviation value for both sides of the first surface and the second surface according to the first coating information and the second coating information, and sending a deviation correction instruction to a deviation correction device according to the deviation value to cause the deviation correction device to perform coating deviation correction on the substrate according to the deviation correction instruction.

In the technical solution of the embodiments of the present application, the deviation value for both sides of the first surface and the second surface is calculated according to the first coating information of the first surface of the substrate and the second coating information of the second surface, and coating deviation correction is performed according to the deviation value. Compared to existing methods that calculate the deviation value for the substrate using a single-reference method, since this embodiment calculates a deviation value for both sides of the first surface and the second surface using a dual-reference method, the calculation error caused by the wide width of the electrode plate is thereby reduced, thus improving the deviation correction effects and enhancing the product yield rate.

In some embodiments, the coating method further includes:
acquiring a first-surface dry-film image of the first surface of the substrate and a second-surface dry-film image of the second surface of the substrate; and
calculating the deviation value for both sides of the first surface and the second surface according to the first-surface dry-film image and the second-surface dry-film image, and sending the deviation correction instruction to the deviation correction device according to the deviation value to cause the deviation correction device to perform coating deviation correction on the substrate according to the deviation correction instruction

In the technical solution of the embodiments of the present application, the deviation value for both sides of the first surface and the second surface is calculated by means of image comparison, that is, the deviation value for both sides of the first surface and the second surface is calculated according to the first-surface dry-film image and the second-surface dry-film image, thereby enabling improvement in the accuracy of the deviation value.

In some embodiments, the calculating the deviation value for both sides of the first surface and the second surface according to the first-surface dry-film image and the second-surface dry-film image includes:
acquiring a second-surface wet-film image of the second surface of the substrate;
calculating a drying compensation value according to the second-surface wet-film image and the second-surface dry-film image; and
calculating the deviation value for both sides of the first surface and the second surface according to the drying compensation value, the first-surface dry-film image, and the second-surface wet-film image.

In the technical solution of the embodiments of the present application, a second-surface wet-film image of the second surface of the substrate is additionally detected, and the deviation value for both sides of the first surface and the second surface is calculated according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

In some embodiments, the coating method further includes:
calculating a single-frame deviation value for both sides between the first surface and the second surface according to the drying compensation value, the first-surface dry-film image, and the second-surface wet-film image, and accumulating single-frame picture heights to obtain an accumulated distance;
in response to the accumulated distance satisfying a preset distance condition, calculating an average deviation value of a plurality of single-frame deviation values within the accumulated distance; and
calculating a deviation correction closed-loop value according to the average deviation value and a deviation correction coefficient; and
in response to the deviation correction closed-loop value satisfying a preset deviation correction condition, sending the deviation correction instruction to the deviation correction device according to the deviation correction closed-loop value.

In the technical solution of the embodiments of the present application, before performing deviation correction, it is also determined whether the accumulated distance of a plurality of frame picture heights satisfies a preset distance condition, and whether the deviation correction closed-loop value satisfies a preset deviation correction condition, thereby enabling improvement in the accuracy of coating deviation correction.

In some embodiments, the coating method further includes:
acquiring an empirical compensation value for the substrate before and after drying of the second surface; and
calculating the deviation value for both sides of the first surface and the second surface according to the empirical compensation value, the first-surface dry-film image, and the second-surface wet-film image, and sending the deviation correction instruction to the deviation correction device according to the deviation value.

In the technical solution of the embodiments of the present application, the deviation value for both sides of the first surface and the second surface is calculated according to the empirical compensation value for the substrate before and after drying of the second surface, the first-surface dry-film image, and the second-surface wet-film image, thereby enabling improvement in the coating deviation correction efficiency and reduction in the coating system cost.

The foregoing description is merely an overview of the technical solutions in the present application. In order that technical means of the present application can be understood more clearly so that the technical means can be implemented according to content of the specification, and in order that the foregoing and other objectives, features, and advantages of the present application can be understood more clearly, specific embodiments of the present application are described below.

### BRIEF DESCRIPTION OF DRAWINGS

FIG. 1 is a cross-sectional view of substrate coating;
FIG. 2 is a schematic diagram of a first surface when calculating a deviation value for a substrate using a single-reference method;
FIG. 3 is a schematic diagram of a second surface when calculating the deviation value for the substrate using the single-reference method;
FIG. 4 is a schematic diagram of a first surface when calculating a deviation value for a substrate according to some embodiments of the present application;
FIG. 5 is a schematic diagram of a second surface when calculating the deviation value for the substrate according to some embodiments of the present application;
FIG. 6 is a first structural diagram of a coating system according to some embodiments of the present application;
FIG. 7 is a second structural diagram of a coating system according to some embodiments of the present application;
FIG. 8 is a third structural diagram of a coating system according to some embodiments of the present application;
FIG. 9 is a fourth structural diagram of a coating system according to some embodiments of the present application;
FIG. 10 is a fifth structural diagram of a coating system according to some embodiments of the present application;
FIG. 11 is a control logic diagram of a control device according to some embodiments of the present application;
FIG. 12 is a detailed control logic diagram of a control device according to some embodiments of the present application;
FIG. 13 is a flowchart of a coating deviation correction method according to some embodiments of the present application; and
FIG. 14 is a flowchart of a coating deviation correction method according to some embodiments of the present application.

Reference numerals in the Detailed Description:
unwinding device 1, coating device 2, transition roller 3, first detector 4, second detector 5, winding device 6;
first-surface coating device 21, first-surface coating head 211, first-surface back roller 212, second-surface coating device 22, second-surface coating head 221, second-surface back roller 222;
deviation corrector 7, deviation correction roller 71;
drying device 8;
third detector 9.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF

### DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meaning of the above terms in embodiments the present application may be understood on a case-by-case basis. It should be understood that the specific embodiments described herein are merely for explaining the present application and are not intended to limit the present application.

At present, from the development of the market situation, the application of batteries is becoming increasingly more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of batteries, the market demand thereof is also constantly expanding.

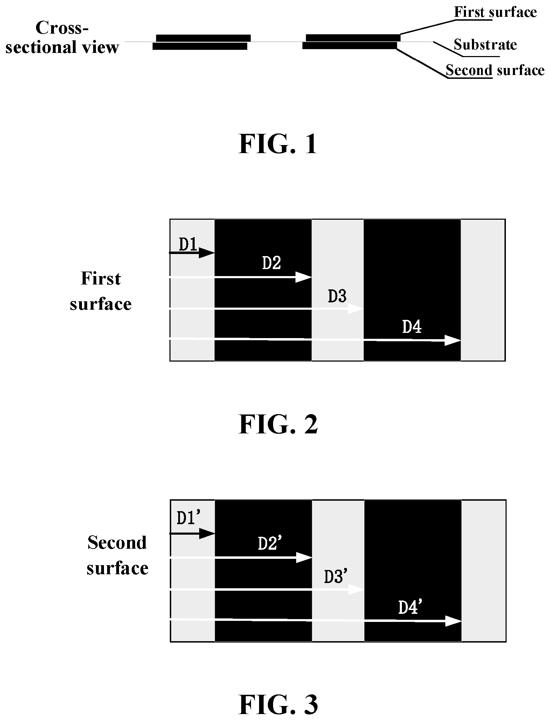

In the coating process during lithium battery production, the deviation value for the substrate is typically calculated using a single-reference method. For ease of understanding, reference is made to FIG. 1 for illustration, where FIG. 1 is a cross-sectional view of substrate coating. In FIG. 1, a foil material is used as the substrate. The foil material may include copper foil and aluminum foil, etc., and is configured to carry active material, serving as the current collector in the battery. The first surface and the second surface of the substrate may be coated with active material separately to form the electrode plate of the battery. Reference is made to FIG. 2 and FIG. 3 for explanation, where FIG. 2 is a schematic diagram of a first surface when calculating a deviation value for a substrate using a single-reference method, and FIG. 3 is a schematic diagram of a second surface when calculating the deviation value for the substrate using the single-reference method. In FIG. 2 and FIG. 3, taking a four-up copper foil electrode plate as an example, the black regions are active-material coating regions. D1, D2, D3, and D4 on the first surface and D1', D2', D3', and D4' on the second surface are all calculated using the left side as the alignment reference. Due to the influence of the wide width of the electrode plate, this method suffers from significant calculation errors and poor deviation correction effects, especially for electrode plates with larger widths, where the defects are more pronounced.

To solve the problems of significant calculation errors and poor deviation correction effects in existing coating deviation correction methods, the deviation value for both sides of the first surface and the second surface can be calculated according to the first coating information of the first surface of the substrate and the second coating information of the second surface of the substrate, and coating deviation correction can be performed according to the deviation value. Compared to existing methods that calculate the deviation value for the substrate using a single-reference method, since the present application calculates a deviation value for both sides of the first surface and the second surface using a dual-reference method, the calculation error caused by the wide width of the electrode plate is thereby reduced, thus improving the deviation correction effects and enhancing the product yield rate.

In some embodiments, a coating system is proposed, including a first detector, a second detector, a control device, and a deviation correction device, where the first detector is configured to detect first coating information of a first surface of a substrate; the second detector is configured to detect second coating information of a second surface of the substrate, the first surface being one surface of the substrate, and the second surface being the other surface of the substrate; the control device is configured to calculate a deviation value for both sides of the first surface and the second surface according to the first coating information and the second coating information, and send a deviation correction instruction to the deviation correction device according to the deviation value; and the deviation correction device is configured to perform coating deviation correction on the substrate according to the deviation correction instruction.

The first detector and the second detector may be visual detectors (e.g., Charge Coupled Device (CCD) cameras), laser detectors, etc. The coating information includes, but is not limited to, information configured to indicate the coating region position. For example, a visual detector may detect a dry-film image of the first surface of the substrate to acquire the first coating information, and a laser detector may obtain the first coating information by emitting a laser beam and detecting the reflection of the laser beam. Similarly, the second detector may also detect the second coating information of the second surface of the substrate in the same manner, which will not be repeated here.

The control device includes, but is not limited to, a Programmable Logic Controller (PLC). The controller may be connected to the first detector and the second detector via a preset communication method, thereby acquiring the first coating information detected by the first detector and the second coating information detected by the second detector, where the preset communication method may be set in advance; for example, the preset communication method may be a bus communication method, which is not limited in this embodiment.

For ease of understanding, reference is made to FIG. 1 for explanation, but this does not limit the solution. FIG. 1 is a cross-sectional view of substrate coating. In FIG. 1, a foil material is used as the substrate. The foil material may include copper foil and aluminum foil, etc., and is configured to carry active material, serving as the current collector in the battery. In the figure, the first surface is one surface of the substrate, and the second surface is the other surface of the substrate.

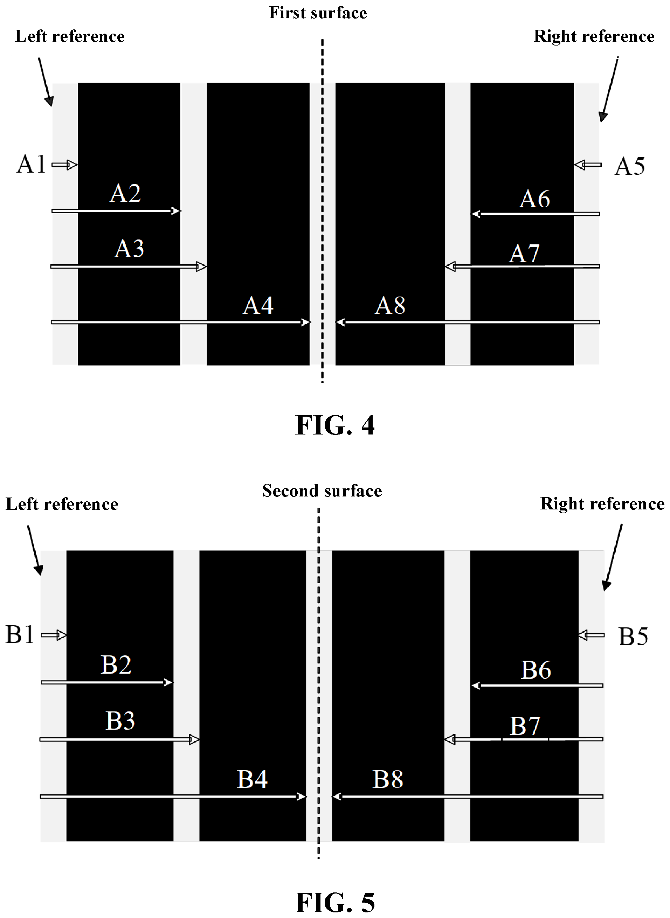

For ease of understanding, reference is made to FIG. 4 and FIG. 5 for explanation, but this does not limit the solution. FIG. 4 is a schematic diagram of a first surface when calculating a deviation value for a substrate according to some embodiments of the present application, and FIG. 5 is a schematic diagram of a second surface when calculating the deviation value for the substrate according to some embodiments of the present application. In FIG. 4 and FIG. 5, taking an eight-up copper foil electrode plate as an example, the black regions are active-material coating regions. In this embodiment, a deviation value for both sides of the first surface and the second surface is calculated using a dual-reference method, that is, the deviation value for both sides of the first surface and the second surface is calculated jointly using a left reference and a right reference, and the specific method is as follows: the misalignment values for the two respective left-side coating regions on the first surface and the second surface are calculated using the left reference, and the specific calculation process is: the left-side first misalignment value L1 = B1 - A1, the left-side second misalignment value L2 = B2 - A2, the left-side third misalignment value L3 = B3 - A3, and the left-side fourth misalignment value L4 = B4 - A4; the misalignment values for the two respective right-side coating regions on the first surface and the second surface are calculated using the right reference, and the specific calculation process is: the right-side first misalignment value R1 = A5 - B5, the right-side second misalignment value R2 = A6 - B6, the right-side third misalignment value R3 = A7 - B7, and the right-side fourth misalignment value R4 = A8 - B8; and the deviation value is calculated according to the left-side misalignment values and the right-side misalignment values, and the specific formula is: the deviation value P = (L1 + L2 + L3 + L4 + R1 + R2 + R3 + R4) / 8.

In this embodiment, the deviation value for both sides of the first surface and the second surface is calculated according to the first coating information of the first surface of the substrate and the second coating information of the second surface, and coating deviation correction is performed according to the deviation value. Compared to existing methods that calculate the deviation value for the substrate using a single-reference method, since this embodiment calculates a deviation value for both sides of the first surface and the second surface using a dual-reference method, the calculation error caused by the wide width of the electrode plate is thereby reduced, thus improving the deviation correction effects and enhancing the product yield rate.

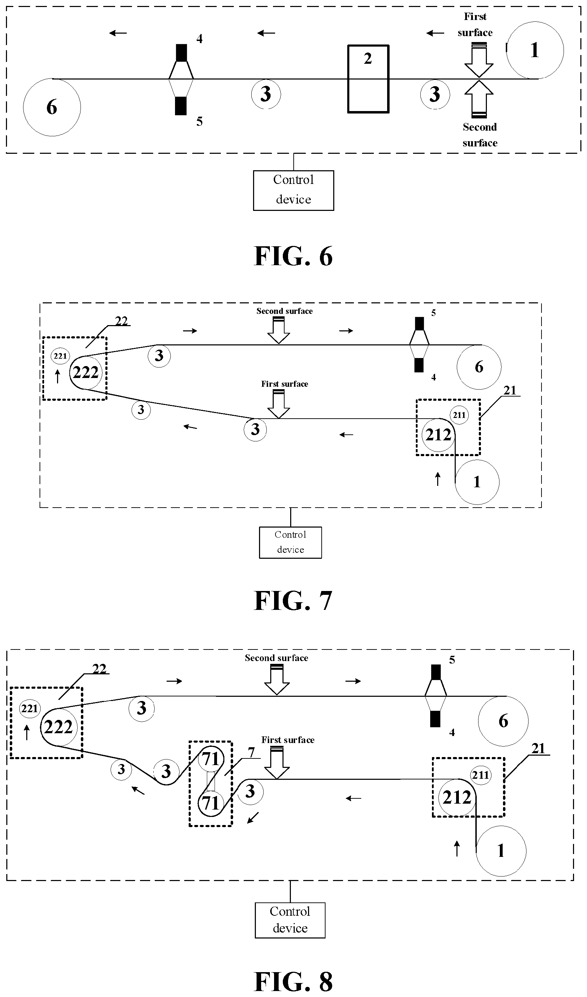

In some embodiments, as shown in FIG. 6, the coating system further includes: an unwinding device 1, a coating device 2, and a winding device 6, the coating device 2 being disposed between the unwinding device 1 and the winding device 6, and the first detector 4 and the second detector 5 being disposed between the coating device 2 and the winding device 6, where the coating device 2 is configured to coat the first surface and the second surface of the substrate.

To improve the coating efficiency, in this embodiment, the first surface and the second surface of the substrate may be coated through double-sided coating. Specifically, the coating system may further include: an unwinding device 1, a coating device 2, and a winding device 6, where the unwinding device 1 is configured to unwind the substrate, the coating device 2 is configured to coat the first surface and the second surface of the substrate, and the winding device 6 is configured to wind the substrate.

The first detector 4 and the second detector 5 may be oppositely disposed on both sides of the substrate, enabling the first detector 4 and the second detector 5 to simultaneously acquire coating information of both sides of the same region on the substrate, and to detect whether coating deviation has occurred by comparing the coating information of both sides of the same region on the substrate, thereby enabling improvement in the accuracy of the deviation value.

Since coating misalignment is caused by misalignment between the coating region position on the first surface and the coating region position on the second surface, during double-sided coating, to perform coating deviation correction on the substrate, the deviation correction device may be the coating device 2. The coating device 2 coats the first surface and the second surface of the substrate respectively according to the deviation correction instruction to perform coating deviation correction on the substrate. Since the deviation correction device is disposed before the first detector 4 and the second detector 5, after the deviation correction device performs coating deviation correction on the substrate according to the deviation correction instruction, the control device may further verify the deviation correction effect according to the first coating information detected by the first detector 4 and the second coating information detected by the second detector 5, thereby enabling closed-loop control for deviation correction.

For ease of understanding, reference is made to FIG. 6 for explanation, but this does not limit the solution. FIG. 6 is a first structural diagram of a coating system according to some embodiments of the present application. In the figure, the substrate travel direction is indicated by arrows. The control device may be connected to other devices in the coating deviation correction system through a preset communication method, and may also control other devices in the coating deviation correction system through the preset communication method, where the preset communication method may be preset; for example, the preset communication method may be a bus communication method, which is not limited in this embodiment. The coating procedure includes the following: the unwinding device 1 unwinds the substrate; the substrate travels through the transition roller 3; the substrate travels to the coating device 2 for coating the first surface and the second surface of the substrate; after coating is completed, the substrate continues to travel through the transition roller 3; when the substrate travels to the detection station, the first detector 4 detects first coating information of the first surface of the substrate, and the second detector 5 detects second coating information of the second surface of the substrate; the substrate continues to travel through the transition roller 3; when the substrate travels to the winding device 6, the winding device 6 winds the substrate. During the traveling process, the control device calculates a deviation value for both sides of the first surface and the second surface according to the first coating information and the second coating information, and sends a deviation correction instruction to the coating device 2 according to the deviation value. The coating device 2 coats the first surface and the second surface of the substrate separately according to the deviation correction instruction to perform coating deviation correction on the substrate.

In this embodiment, the first surface and the second surface of the substrate are coated through double-sided coating, thereby enabling improvement in the coating efficiency.

In some embodiments, as shown in FIG. 7, the coating device 2 includes a first-surface coating device 21 and a second-surface coating device 22, the first-surface coating device 21 being disposed at an unwinding position of the unwinding device 1, and the second-surface coating device 22 being disposed between the first-surface coating device 21 and the winding device 6, where the first-surface coating device 21 is configured to coat the first surface of the substrate; and the second-surface coating device 22 is configured to coat the second surface of the substrate.

To enhance the product yield rate, in this embodiment, the first-surface coating device 21 and the second-surface coating device 22 may also be separately provided, where the first-surface coating device 21 is configured to coat the first surface of the substrate, and the second-surface coating device 22 is configured to coat the second surface of the substrate.

The first-surface coating device 21 includes, but is not limited to, a first-surface coating head 211 and a first-surface back roller 212, where the first-surface coating head 211 is configured to coat the first surface of the substrate, and the first-surface back roller 212 is configured to drive the substrate to travel during the coating process of the first surface; and the second-surface coating device 22 includes, but is not limited to, a second-surface coating head 221 and a second-surface back roller 222, where the second-surface coating head 221 is configured to coat the second surface of the substrate, and the second-surface back roller 222 is configured to drive the substrate to travel during the coating process of the second surface.

Since coating misalignment is caused by misalignment between the coating region position on the first surface and the coating region position on the second surface, when performing coating separately, to achieve coating deviation correction on the substrate, the deviation correction device needs to correct the substrate for which coating of the first surface is completed but the second surface has not yet been coated. That is, the deviation correction device may be disposed between the first-surface coating device 21 and the second-surface coating device 22. The deviation correction device performs deviation correction on substrate travel according to the deviation correction instruction to achieve coating deviation correction. Certainly, in this embodiment, the deviation correction device may also be the second-surface coating device 22. The second-surface coating device 22 coats the second surface of the substrate according to the deviation correction instruction to perform coating deviation correction on the substrate.

For ease of understanding, reference is made to FIG. 7 for explanation, but this does not limit the solution. FIG. 7 is a second structural diagram of a coating system according to some embodiments of the present application. In the figure, the substrate travel direction is indicated by arrows. The control device may be connected to other devices in the coating deviation correction system through a preset communication method, and may also control other devices in the coating deviation correction system through the preset communication method, where the preset communication method may be preset; for example, the preset communication method may be a bus communication method, which is not limited in this embodiment. The coating procedure includes: the unwinding device 1 unwinds the substrate; the substrate travels to the first-surface coating head 211 for coating the first surface of the substrate; after coating is completed, the substrate continues to travel through the first-surface back roller 212 and the transition roller 3; the substrate travels to the second-surface coating head 221 for coating the second surface of the substrate; after coating is completed, the substrate continues to travel through the second-surface back roller 222 and the transition roller 3; when the substrate travels to the detection station, the first detector 4 detects first coating information of the first surface of the substrate, and the second detector 5 detects second coating information of the second surface of the substrate; the substrate continues to travel through the transition roller 3; when the substrate travels to the winding device 6, the winding device 6 winds the substrate. During the traveling process, the control device calculates a deviation value for both sides of the first surface and the second surface according to the first coating information and the second coating information, and sends a deviation correction instruction to the deviation correction device (not shown in the figure) according to the deviation value to cause the deviation correction device to perform coating deviation correction on the substrate according to the deviation correction instruction.

In this embodiment, a first-surface coating device 21 and a second-surface coating device 22 are separately provided, where the first-surface coating device 21 is configured to coat the first surface of the substrate, and the second-surface coating device 22 is configured to coat the second surface of the substrate, thereby enabling improvement in the product yield rate.

In some embodiments, as shown in FIG. 8, the coating system further includes: a deviation corrector 7, the deviation corrector 7 being disposed between the first-surface coating device 21 and the second-surface coating device 22, and the deviation correction device being the deviation corrector 7 and/or the second-surface coating device 22, where the deviation corrector 7 is configured to adjust a position of the substrate according to the deviation correction instruction to perform deviation correction on the substrate; and the second-surface coating device 22 is configured to coat the second surface of the substrate according to the deviation correction instruction to perform coating deviation correction on the substrate.

In order to improve the deviation correction effect, in this embodiment, the deviation correction device may be the deviation corrector 7, which is configured to adjust a position of the substrate according to the deviation correction instruction to perform deviation correction on the substrate. Since coating misalignment is caused by misalignment between the coating region position on the first surface and the coating region position on the second surface, the deviation corrector 7 may be disposed between the first-surface coating device 21 and the second-surface coating device 22 to perform deviation correction on the substrate for which coating of the first surface is completed but the second surface has not yet been coated. The deviation corrector 7 may include a deviation correction roller 71. The deviation correction principle of the deviation correction roller 71 may be that the deviation correction roller 71 swings to drive the substrate to move left and right to perform coating deviation correction.

To reduce the number of devices in the coating system and lower the coating deviation correction cost, in this embodiment, the deviation correction device may also be the second-surface coating device 22. The second-surface coating device 22 coats the second surface of the substrate according to the deviation correction instruction to perform coating deviation correction on the substrate.

Certainly, to further improve the deviation correction effect, in this embodiment, the deviation correction device may also be the deviation corrector 7 and the second-surface coating device 22. The deviation corrector 7 and the second-surface coating device 22 jointly perform coating deviation correction on the substrate according to the deviation correction instruction.

For ease of understanding, reference is made to FIG. 8 for explanation, but this does not limit the solution. FIG. 8 is a third structural diagram of a coating system according to some embodiments of the present application. In the figure, the substrate travel direction is indicated by arrows. The control device may be connected to other devices in the coating deviation correction system through a preset communication method, and may also control other devices in the coating deviation correction system through the preset communication method, where the preset communication method may be preset; for example, the preset communication method may be a bus communication method, which is not limited in this embodiment. The coating procedure includes: the unwinding device 1 unwinds the substrate; the substrate travels to the first-surface coating head 211 for coating the first surface of the substrate; after coating is completed, the substrate continues to travel through the first-surface back roller 212 and the transition roller 3; the substrate travels to the second-surface coating head 221 for coating the second surface of the substrate; after coating is completed, the substrate continues to travel through the second-surface back roller 222 and the transition roller 3; when the substrate travels to the detection station, the first detector 4 detects first coating information of the first surface of the substrate, and the second detector 5 detects second coating information of the second surface of the substrate; the substrate continues to travel through the transition roller 3; when the substrate travels to the winding device 6, the winding device 6 winds the substrate. During the traveling process, the control device calculates a deviation value for both sides of the first surface and the second surface according to the first coating information and the second coating information, and sends a deviation correction instruction to the deviation corrector 7 and/or second-surface coating device 22 according to the deviation value to cause the deviation corrector 7 and/or second-surface coating device 22 to perform coating deviation correction on the substrate according to the deviation correction instruction.

In this embodiment, coating deviation correction is performed on the substrate through the deviation corrector 7 and/or the second-surface coating device 22, thereby enabling improvement in the deviation correction effects or enabling reduction in the coating deviation correction cost.

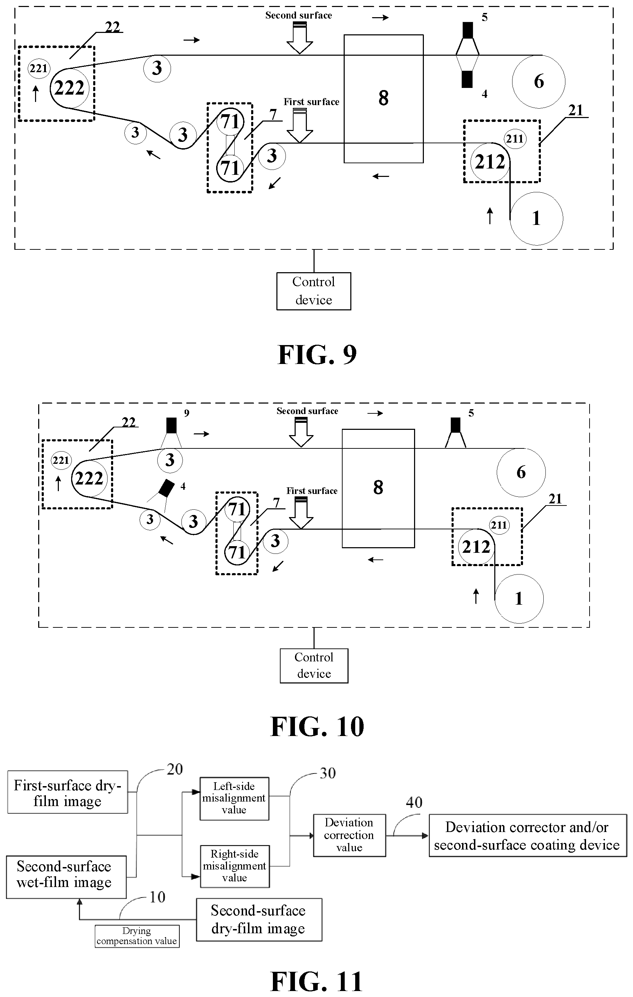

In some embodiments, as shown in FIG. 9, the coating system further includes: a drying device 8, the drying device 8 being disposed between the first-surface coating device 21 and the second-surface coating device 22, and also being disposed between the second-surface coating device 22 and the winding device 6, where the drying device 8 is configured to dry the first surface and the second surface of the substrate.

To reduce the coating drying costs, in this embodiment, the coating system further includes a drying device 8, where the drying device 8 includes, but is not limited to, an oven. The drying device 8 may be disposed between the first-surface coating device 21 and the second-surface coating device 22, and is also disposed between the second-surface coating device 22 and the winding device 6, thereby enabling drying of both the first surface and the second surface of the substrate without the need to set up a plurality of drying devices 8, and thus enabling reduction in the coating drying costs.

For ease of understanding, reference is made to FIG. 9 for explanation, but this does not limit the solution. FIG. 9 is a fourth structural diagram of a coating system according to some embodiments of the present application. In the figure, the substrate travel direction is indicated by arrows. The control device may be connected to other devices in the coating deviation correction system through a preset communication method, and may also control other devices in the coating deviation correction system through the preset communication method, where the preset communication method may be preset; for example, the preset communication method may be a bus communication method, which is not limited in this embodiment. The coating procedure includes the following: the unwinding device 1 unwinds the substrate; the substrate travels to the first-surface coating head 211 for coating the first surface of the substrate; after coating is completed, the substrate continues to travel through the first-surface back roller 212 and the transition roller 3; the substrate travels to the drying device 8 for drying the first surface; after drying is completed, the substrate continues to travel through the transition roller 3; the substrate travels to the second-surface coating head 221 for coating the second surface of the substrate; after coating is completed, the substrate continues to travel through the second-surface back roller 222 and the transition roller 3; the substrate travels to the drying device 8 for drying the second surface; after drying is completed, the substrate continues to travel through the transition roller 3; when the substrate travels to the detection station, the first detector 4 detects first coating information of the first surface of the substrate, and the second detector 5 detects second coating information of the second surface of the substrate; the substrate continues to travel through the transition roller 3; when the substrate travels to the winding device 6, the winding device 6 winds the substrate. During the traveling process, the control device calculates a deviation value for both sides of the first surface and the second surface according to the first coating information and the second coating information, and sends a deviation correction instruction to the deviation corrector 7 and/or the second-surface coating device 22 according to the deviation value to cause the deviation corrector 7 and/or the second-surface coating device 22 to perform coating deviation correction on the substrate according to the deviation correction instruction.

In this embodiment, the drying device 8 may be disposed between the first-surface coating device 21 and the second-surface coating device 22, and is also disposed between the second-surface coating device 22 and the winding device 6, thereby enabling drying of both the first surface and the second surface of the substrate without the need to set up a plurality of drying devices 8, and thus enabling reduction in the coating drying costs.

In some embodiments, as shown in FIG. 9, the first detector 4 and the second detector 5 are disposed between the drying device 8 and the winding device 6, where the first detector 4 is configured to detect a first-surface dry-film image of the first surface of the substrate; the second detector 5 is configured to detect a second-surface dry-film image of the second surface of the substrate; and the control device is configured to calculate the deviation value for both sides of the first surface and the second surface according to the first-surface dry-film image and the second-surface dry-film image, and send the deviation correction instruction to the deviation correction device according to the deviation value.

To improve the accuracy of the deviation value, in this embodiment, the deviation value for both sides of the first surface and the second surface is calculated by means of image comparison, that is, the deviation value for both sides of the first surface and the second surface is calculated according to the first-surface dry-film image and the second-surface dry-film image. Specifically, the deviation value for both sides of the first surface and the second surface may be calculated by comparing the first-surface dry-film size in the first-surface dry-film image and the second-surface dry-film size in the second-surface dry-film image.

In this embodiment, the first detector 4 and the second detector 5 may be CCD cameras, which are respectively configured to detect the first-surface dry-film image of the first surface of the substrate and the second-surface dry-film image of the second surface of the substrate. For specific steps of calculating the deviation value for both sides of the first surface and the second surface according to the first-surface dry-film image and the second-surface dry-film image, reference may be made to FIG. 4 and FIG. 5, which will not be repeated here.

For ease of understanding, reference is made to FIG. 9 for explanation, but this does not limit the solution. FIG. 9 is a fourth structural diagram of a coating system according to some embodiments of the present application. In the figure, the substrate travel direction is indicated by arrows. The control device may be connected to other devices in the coating deviation correction system through a preset communication method, and may also control other devices in the coating deviation correction system through the preset communication method, where the preset communication method may be preset; for example, the preset communication method may be a bus communication method, which is not limited in this embodiment. The coating procedure includes the following: the unwinding device 1 unwinds the substrate; the substrate travels to the first-surface coating head 211 for coating the first surface of the substrate; after coating is completed, the substrate continues to travel through the first-surface back roller 212 and the transition roller 3; the substrate travels to the drying device 8 for drying the first surface; after drying is completed, the substrate continues to travel through the transition roller 3; the substrate travels to the second-surface coating head 221 for coating the second surface of the substrate; after coating is completed, the substrate continues to travel through the second-surface back roller 222 and the transition roller 3; the substrate travels to the drying device 8 for drying the second surface; after drying is completed, the substrate continues to travel through the transition roller 3; when the substrate travels to the detection station, the first detector 4 detects first-surface dry-film image of the first surface of the substrate, and the second detector 5 detects second-surface dry-film image of the second surface of the substrate; the substrate continues to travel through the transition roller 3; when the substrate travels to the winding device 6, the winding device 6 winds the substrate. During the traveling process, the control device calculates a deviation value for both sides of the first surface and the second surface according to the first-surface dry-film image and the second-surface dry-film image, and sends a deviation correction instruction to the deviation corrector 7 and/or the second-surface coating device 22 according to the deviation value to cause the deviation corrector 7 and/or the second-surface coating device 22 to perform coating deviation correction on the substrate according to the deviation correction instruction.

In this embodiment, the deviation value for both sides of the first surface and the second surface is calculated by means of image comparison, that is, the deviation value for both sides of the first surface and the second surface is calculated according to the first-surface dry-film image and the second-surface dry-film image, thereby enabling improvement in the accuracy of the deviation value.

In some embodiments, as shown in FIG. 10, the coating system further includes: a third detector 9, the third detector 9 being disposed between the second-surface coating device 22 and the drying device 8, the first detector 4 being disposed between the drying device 8 and the second-surface coating device 22, and the second detector 5 being disposed between the drying device 8 and the winding device 6, where the third detector 9 is configured to detect a second-surface wet-film image of the second surface of the substrate; and the control device is configured to calculate a drying compensation value according to the second-surface wet-film image and the second-surface dry-film image, calculate the deviation value for both sides of the first surface and the second surface according to the drying compensation value, the first-surface dry-film image, and the second-surface wet-film image, and send the deviation correction instruction to the deviation correction device according to the deviation value.

Considering the deviation correction method where the first detector 4 and the second detector 5 are disposed before the winding device 6, since the positions of the first detector 4 and the second detector 5 are far from the deviation correction device, the deviation correction effect can only be verified after a long travel distance, resulting in poor real-time performance of deviation correction.

Therefore, to overcome the above-mentioned defect, in this embodiment, a third detector 9 may be additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector 4 is moved forward to between the drying device 8 and the second-surface coating device 22, and the position of the third detector 9 is set between the second-surface coating device 22 and the drying device 8, the distances between the detectors and the deviation correction device can thereby be shortened, making the detectors closer to the deviation correction device, and thus enabling shortening of the time required to verify the deviation correction effect and improvement in the real-time performance of coating deviation correction.

For ease of understanding, reference is made to FIG. 10 for explanation, but this does not limit the solution. FIG. 10 is a fifth structural diagram of a coating system according to some embodiments of the present application. In the figure, the substrate travel direction is indicated by arrows. The control device may be connected to other devices in the coating deviation correction system through a preset communication method, and may also control other devices in the coating deviation correction system through the preset communication method, where the preset communication method may be preset; for example, the preset communication method may be a bus communication method, which is not limited in this embodiment. The coating procedure includes the following: the unwinding device 1 unwinds the substrate; the substrate travels to the first-surface coating head 211 for coating the first surface of the substrate; after coating is completed, the substrate continues to travel through the first-surface back roller 212 and the transition roller 3; the substrate travels to the drying device 8 for drying the first surface; after drying is completed, the substrate continues to travel through the transition roller 3; when the substrate travels to the detection station corresponding to the first detector 4, the first detector 4 detects a first-surface dry-film image of the first surface of the substrate; the substrate continues to travel through the transition roller 3; the substrate travels to the second-surface coating head 221 for coating the second surface of the substrate; after coating is completed, the substrate continues to travel through the second-surface back roller 222 and the transition roller 3; when the substrate travels to the detection station corresponding to the third detector 9, the third detector 9 detects a second-surface wet-film image of the second surface of the substrate; the substrate continues to travel through the transition roller 3; the substrate travels to the drying device 8 for drying the second surface; after drying is completed, the substrate continues to travel through the transition roller 3; when the substrate travels to the detection station corresponding to the second detector 5, the second detector 5 detects a second-surface dry-film image of the second surface of the substrate; the substrate continues to travel through the transition roller 3; when the substrate travels to the winding device 6, the winding device 6 winds the substrate. During the traveling process, the control device calculates a drying compensation value according to the second-surface wet-film image and the second-surface dry-film image, calculates a deviation value for both sides of the first surface and the second surface according to the drying compensation value, the first-surface dry-film image, and the second-surface wet-film image, and sends a deviation correction instruction to the deviation corrector 7 and/or the second-surface coating device 22 according to the deviation value to cause the deviation corrector 7 and/or the second-surface coating device 22 to perform coating deviation correction on the substrate according to the deviation correction instruction.

For ease of understanding, reference is made to FIG. 11 for explanation, but this does not limit the solution. FIG. 11 is a control logic diagram of a control device according to some embodiments of the present application. In the figure, the control logic of the control device includes the following steps:
step 10: calculating a drying compensation value according to the second-surface wet-film image and the second-surface dry-film image: comparing the second-surface wet-film size in the second-surface wet-film image and the second-surface dry-film size in the second-surface dry-film image to obtain the drying compensation value;
step 20: calculating a left-side misalignment value and a right-side misalignment value between the first surface and the second surface according to the drying compensation value, the first-surface dry-film image, and the second-surface wet-film image: where as shown in FIG. 4 and FIG. 5, the left-side first misalignment value L1 = (B1 - C) - A1, the left-side second misalignment value L2 = (B2 - C) - C, the left-side third misalignment value L3 = (B3 - C) - A3, and the left-side fourth misalignment value L4 = (B4 - C) - A4; and the misalignment values for the two respective right-side coating regions on the first surface and the second surface are calculated using the right reference, and the specific calculation process is: the right-side first misalignment value R1 = A5 - (B5 - C), the right-side second misalignment value R2 = A6 - (B6 - C), the right-side third misalignment value R3 = A7 - (B7 - C), and the right-side fourth misalignment value R4 = A8 - (B8 - C), where C is the drying compensation value;
step 30: calculating the deviation value for both sides of the first surface and the second surface according to the left-side misalignment values and the right-side misalignment values, and the specific formula is: the deviation value P = (L1 + L2 + L3 + L4 + R1 + R2 + R3 + R4) / 8; and
step 40: sending a deviation correction instruction to the deviation corrector 7 and/or the second-surface coating device 22 according to the deviation value to cause the deviation corrector 7 and/or the second-surface coating device 22 to perform coating deviation correction on the substrate according to the deviation correction instruction.

In this embodiment, a third detector 9 is additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector 4 is moved forward to between the drying device 8 and the second-surface coating device 22, and the position of the third detector 9 is set between the second-surface coating device 22 and the drying device 8, the distances between the detectors and the deviation correction device can thereby be shortened, making the detectors closer to the deviation correction device, and thus enabling shortening of the time required to verify the deviation correction effect and improvement in the real-time performance of coating deviation correction.

In some embodiments, the control device is further configured to calculate a single-frame deviation value for both sides between the first surface and the second surface according to the drying compensation value, the first-surface dry-film image, and the second-surface wet-film image, and accumulate single-frame picture heights to obtain an accumulated distance; in response to the accumulated distance satisfying a preset distance condition, calculate an average deviation value of a plurality of single-frame deviation values within the accumulated distance; calculate a deviation correction closed-loop value according to the average deviation value and a deviation correction coefficient; and in response to the deviation correction closed-loop value satisfying a preset deviation correction condition, send the deviation correction instruction to the deviation correction device according to the deviation correction closed-loop value.

To improve the accuracy of coating deviation correction, in this embodiment, before performing deviation correction, it is also determined whether the accumulated distance of a plurality of frame picture heights satisfies a preset distance condition, and whether the deviation correction closed-loop value satisfies a preset deviation correction condition.

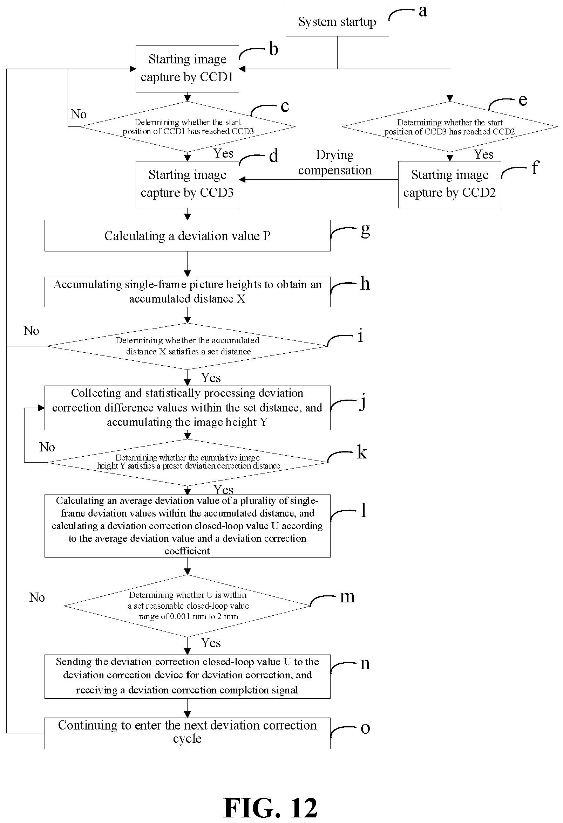

For ease of understanding, reference is made to FIG. 12 for explanation, but this does not limit the solution. FIG. 12 is a detailed control logic diagram of a control device according to some embodiments of the present application. In the figure, the detailed control logic of the control device includes the following steps:
step a: system startup;
step b: starting image capture by CCD1: after the system starts, when the substrate travels to the detection station corresponding to the first detector (i.e., CCD1 in the figure), the first detector detects a first-surface dry-film image of the first surface of the substrate;
step c: determining whether the start position of CCD1 has reached CCD3: i.e., it is determined whether the substrate has traveled to the detection station corresponding to the third detector (i.e., CCD3 in the figure);
step d: starting image capture by CCD3: when the substrate travels to the detection station corresponding to the third detector (i.e., CCD3 in the figure), the third detector detects a second-surface wet-film image of the second surface of the substrate;
step e: determining whether the start position of CCD3 has reached CCD2: i.e., it is determined whether the substrate has traveled to the detection station corresponding to the second detector (i.e., CCD2 in the figure);
step f: starting image capture by CCD2: when the substrate travels to the detection station corresponding to the second detector (i.e., CCD2 in the figure), the second detector detects a second-surface dry-film image of the second surface of the substrate;
step g: calculating a deviation value P: the control device calculates a drying compensation value according to the second-surface wet-film image and the second-surface dry-film image, and calculates a deviation value P for both sides of the first surface and the second surface according to the drying compensation value, the first-surface dry-film image, and the second-surface wet-film image;
step h: accumulating single-frame picture heights to obtain an accumulated distance X: in this embodiment, by accumulating the single-frame picture heights, the travel distance of the substrate in this deviation correction (i.e., the accumulated distance X) can be obtained;
step i: determining whether the accumulated distance X satisfies a set distance: if coating deviation correction is performed each time a set of images is obtained, it may lead to frequent deviation correction, affecting the product yield rate; therefore, in this embodiment, it is also necessary to determine whether the accumulated distance satisfies the set distance before performing deviation correction, where the set distance may be preset; certainly, to avoid affecting normal coating, in this embodiment, the set distance may also be set as the working distance of the coating head or the deviation correction device.
step j: accumulating single-frame picture heights to obtain a cumulative image height Y: in this embodiment, by accumulating the single-frame picture heights, the travel distance of the substrate in this deviation correction can be obtained;
step k: determining whether the cumulative image height Y satisfies a preset deviation correction distance: since the first detector and the third detector are disposed at different positions, to ensure that the first-surface dry-film image obtained by the first detector and the second-surface wet-film image obtained by the third detector are coating images of two surfaces of the same region on the substrate, in this embodiment, it is also necessary to determine whether the cumulative image height Y satisfies the preset deviation correction distance, where the preset deviation correction distance may be preset, for example, the preset deviation correction distance may be set as the distance between the first detector and the third detector;
step 1: calculating an average deviation value of a plurality of single-frame deviation values within the accumulated distance, and calculating a deviation correction closed-loop value U according to the average deviation value and a deviation correction coefficient: the deviation correction closed-loop value U = the average deviation value * the deviation correction coefficient, where the deviation correction coefficient may be preset according to actual requirements;
step m: determining whether U is within a set reasonable closed-loop value range of 0.001 mm to 2 mm;
step n: sending the deviation correction closed-loop value U to the deviation correction device for deviation correction, and receiving a deviation correction completion signal; and
step o: continuing to enter the next deviation correction cycle.

In this embodiment, before performing deviation correction, it is also determined whether the accumulated distance of a plurality of frame picture heights satisfies a preset distance condition, and whether the deviation correction closed-loop value satisfies a preset deviation correction condition, thereby enabling improvement in the accuracy of coating deviation correction.

In some embodiments, the control device is further configured to acquire an empirical compensation value for the substrate before and after drying of the second surface; and calculate the deviation value for both sides of the first surface and the second surface according to the empirical compensation value, the first-surface dry-film image, and the second-surface wet-film image, and send the deviation correction instruction to the deviation correction device according to the deviation value.

In order to improve coating deviation correction efficiency and reduce the cost of the coating system, in this embodiment, a deviation value for both sides of the first surface and the second surface may also be calculated according to an empirical compensation value for the substrate before and after drying of the second surface, the first-surface dry-film image, and the second-surface wet-film image, where the empirical compensation value may be preset; for example, a manager of the coating system may preset the empirical compensation value for the substrate before and after drying of the second surface according to coating experience, which is not limited in this embodiment.

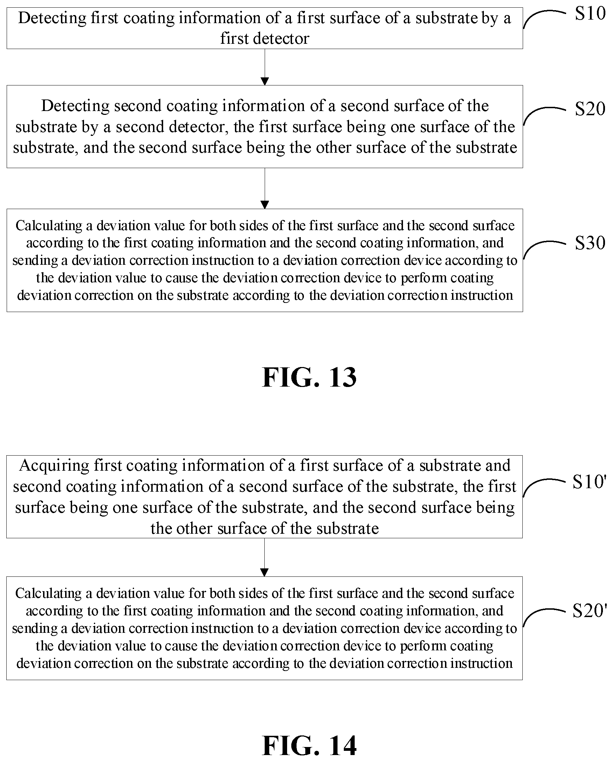

In some embodiments, as shown in FIG. 13, a coating method is provided, including the following steps.

Step S10: detecting first coating information of a first surface of a substrate by a first detector.

The first detector and the second detector may be visual detectors (e.g., Charge Coupled Device (CCD) cameras), laser detectors, etc. The coating information includes, but is not limited to, information configured to indicate the coating region position. For example, a visual detector may detect a dry-film image of the first surface of the substrate to acquire the first coating information, and a laser detector may obtain the first coating information by emitting a laser beam and detecting the reflection of the laser beam. Similarly, the second detector may also detect the second coating information of the second surface of the substrate in the same manner, which will not be repeated here.

Step S20: detecting second coating information of a second surface of the substrate by a second detector, the first surface being one surface of the substrate, and the second surface being the other surface of the substrate.

For ease of understanding, reference is made to FIG. 1 for explanation, but this does not limit the solution. FIG. 1 is a cross-sectional view of substrate coating. In FIG. 1, a foil material is used as the substrate. The foil material may include copper foil and aluminum foil, etc., and is configured to carry active material, serving as the current collector in the battery. In the figure, the first surface is one surface of the substrate, and the second surface is the other surface of the substrate.

Step S30: calculating a deviation value for both sides of the first surface and the second surface according to the first coating information and the second coating information, and sending a deviation correction instruction to a deviation correction device according to the deviation value to cause the deviation correction device to perform coating deviation correction on the substrate according to the deviation correction instruction.

The control device is configured to calculate a deviation value for both sides of the first surface and the second surface according to the first coating information and the second coating information, and send a deviation correction instruction to the deviation correction device according to the deviation value. The control device includes, but is not limited to, a Programmable Logic Controller (PLC). The controller may be connected to the first detector and the second detector via a preset communication method, thereby acquiring the first coating information detected by the first detector and the second coating information detected by the second detector, where the preset communication method may be set in advance; for example, the preset communication method may be a bus communication method, which is not limited in this embodiment.

For ease of understanding, reference is made to FIG. 4 and FIG. 5 for explanation, but this does not limit the solution. FIG. 4 is a schematic diagram of a first surface when calculating a deviation value for a substrate according to some embodiments of the present application, and FIG. 5 is a schematic diagram of a second surface when calculating the deviation value for the substrate according to some embodiments of the present application. In FIG. 4 and FIG. 5, taking an eight-up copper foil electrode plate as an example, the black regions are active-material coating regions. In this embodiment, a deviation value for both sides of the first surface and the second surface is calculated using a dual-reference method, that is, the deviation value for both sides of the first surface and the second surface is calculated jointly using a left reference and a right reference, and the specific method is as follows: the misalignment values for the two respective left-side coating regions on the first surface and the second surface are calculated using the left reference, and the specific calculation process is: the left-side first misalignment value L1 = B1 - A1, the left-side second misalignment value L2 = B2 - A2, the left-side third misalignment value L3 = B3 - A3, and the left-side fourth misalignment value L4 = B4 - A4; the misalignment values for the two respective right-side coating regions on the first surface and the second surface are calculated using the right reference, and the specific calculation process is: the right-side first misalignment value R1 = A5 - B5, the right-side second misalignment value R2 = A6 - B6, the right-side third misalignment value R3 = A7 - B7, and the right-side fourth misalignment value R4 = A8 - B8; and the deviation value is calculated according to the left-side misalignment values and the right-side misalignment values, and the specific formula is: the deviation value P = (L1 + L2 + L3 + L4 + R1 + R2 + R3 + R4) / 8.

In this embodiment, the deviation value for both sides of the first surface and the second surface is calculated according to the first coating information of the first surface of the substrate and the second coating information of the second surface, and coating deviation correction is performed according to the deviation value. Compared to existing methods that calculate the deviation value for the substrate using a single-reference method, since this embodiment calculates a deviation value for both sides of the first surface and the second surface using a dual-reference method, the calculation error caused by the wide width of the electrode plate is thereby reduced, thus improving the deviation correction effects and enhancing the product yield rate.

In some embodiments, the coating method further includes: detecting a first-surface dry-film image of the first surface of the substrate by the first detector; detecting a second-surface dry-film image of the second surface of the substrate by the second detector; and calculating the deviation value for both sides of the first surface and the second surface according to the first-surface dry-film image and the second-surface dry-film image, and sending the deviation correction instruction to the deviation correction device according to the deviation value to cause the deviation correction device to perform coating deviation correction on the substrate according to the deviation correction instruction.

To improve the accuracy of the deviation value, in this embodiment, the deviation value for both sides of the first surface and the second surface is calculated by means of image comparison, that is, the deviation value for both sides of the first surface and the second surface is calculated according to the first-surface dry-film image and the second-surface dry-film image. Specifically, the deviation value for both sides of the first surface and the second surface may be calculated by comparing the first-surface dry-film size in the first-surface dry-film image and the second-surface dry-film size in the second-surface dry-film image.

In this embodiment, the first detector and the second detector may be CCD cameras, which are respectively configured to detect the first-surface dry-film image of the first surface of the substrate and the second-surface dry-film image of the second surface of the substrate. For specific steps of calculating the deviation value for both sides of the first surface and the second surface according to the first-surface dry-film image and the second-surface dry-film image, reference may be made to FIG. 4 and FIG. 5, which will not be repeated here.

In this embodiment, the deviation value for both sides of the first surface and the second surface is calculated by means of image comparison, that is, the deviation value for both sides of the first surface and the second surface is calculated according to the first-surface dry-film image and the second-surface dry-film image, thereby enabling improvement in the accuracy of the deviation value.

In some embodiments, the coating method further includes: detecting a second-surface wet-film image of the second surface of the substrate by a third detector; and calculating a drying compensation value according to the second-surface wet-film image and the second-surface dry-film image, and calculating the deviation value for both sides of the first surface and the second surface according to the drying compensation value, the first-surface dry-film image, and the second-surface wet-film image, and sending the deviation correction instruction to the deviation correction device according to the deviation value to cause the deviation correction device to perform coating deviation correction on the substrate according to the deviation correction instruction.

Considering the deviation correction method where the first detector and the second detector are disposed before the winding device, since the positions of the first detector and the second detector are far from the deviation correction device, the deviation correction effect can only be verified after a long travel distance, resulting in poor real-time performance of deviation correction.

Therefore, to overcome the above-mentioned defect, in this embodiment, a third detector may be additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

For ease of understanding, reference is made to FIG. 11 for explanation, but this does not limit the solution. FIG. 11 is a control logic diagram of a control device according to some embodiments of the present application. In the figure, the control logic of the control device includes the following steps:
step 10: calculating a drying compensation value according to the second-surface wet-film image and the second-surface dry-film image: comparing the second-surface wet-film size in the second-surface wet-film image and the second-surface dry-film size in the second-surface dry-film image to obtain the drying compensation value;
step 20: calculating a left-side misalignment value and a right-side misalignment value between the first surface and the second surface according to the drying compensation value, the first-surface dry-film image, and the second-surface wet-film image: where as shown in FIG. 4 and FIG. 5, the left-side first misalignment value L1 = (B1 - C) - A1, the left-side second misalignment value L2 = (B2 - C) - C, the left-side third misalignment value L3 = (B3 - C) - A3, and the left-side fourth misalignment value L4 = (B4 - C) - A4; and the misalignment values for the two respective right-side coating regions on the first surface and the second surface are calculated using the right reference, and the specific calculation process is: the right-side first misalignment value R1 = A5 - (B5 - C), the right-side second misalignment value R2 = A6 - (B6 - C), the right-side third misalignment value R3 = A7 - (B7 - C), and the right-side fourth misalignment value R4 = A8 - (B8 - C), where C is the drying compensation value;
step 30: calculating the deviation value for both sides of the first surface and the second surface according to the left-side misalignment values and the right-side misalignment values, and the specific formula is: the deviation value P = (L1 + L2 + L3 + L4 + R1 + R2 + R3 + R4) / 8; and
step 40: sending a deviation correction instruction to the deviation corrector and/or the second-surface coating device according to the deviation value to cause the deviation corrector and/or the second-surface coating device to perform coating deviation correction on the substrate according to the deviation correction instruction.

In this embodiment, a third detector is additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

In some embodiments, as shown in FIG. 14, a coating method is provided, including the following steps.

Step S 10': acquiring first coating information of a first surface of a substrate and second coating information of a second surface of the substrate, the first surface being one surface of the substrate, and the second surface being the other surface of the substrate.

The execution entity of this embodiment may be a control device having functions of data processing, network communication, and program execution, for example, an upper computer, or another electronic device capable of achieving the same or similar functions, which is not limited in this embodiment.

The first coating information of the first surface of the substrate may be obtained by a first detector, and the second coating information of the second surface of the substrate may be obtained by a second detector. The first detector and the second detector may be visual detectors (e.g., Charge Coupled Device (CCD) cameras), laser detectors, etc. The coating information includes, but is not limited to, information configured to indicate the coating region position. For example, a visual detector may detect a dry-film image of the first surface of the substrate to acquire the first coating information, and a laser detector may obtain the first coating information by emitting a laser beam and detecting the reflection of the laser beam. Similarly, the second detector may also detect the second coating information of the second surface of the substrate in the same manner, which will not be repeated here.

For ease of understanding, reference is made to FIG. 1 for explanation, but this does not limit the solution. FIG. 1 is a cross-sectional view of substrate coating. In FIG. 1, a foil material is used as the substrate. The foil material may include copper foil and aluminum foil, etc., and is configured to carry active material, serving as the current collector in the battery. In the figure, the first surface is one surface of the substrate, and the second surface is the other surface of the substrate.

Step S20': calculating a deviation value for both sides of the first surface and the second surface according to the first coating information and the second coating information, and sending a deviation correction instruction to a deviation correction device according to the deviation value to cause the deviation correction device to perform coating deviation correction on the substrate according to the deviation correction instruction

The control device is configured to calculate a deviation value for both sides of the first surface and the second surface according to the first coating information and the second coating information, and send a deviation correction instruction to the deviation correction device according to the deviation value. The control device includes, but is not limited to, a Programmable Logic Controller (PLC). The controller may be connected to the first detector and the second detector via a preset communication method, thereby acquiring the first coating information detected by the first detector and the second coating information detected by the second detector, where the preset communication method may be set in advance; for example, the preset communication method may be a bus communication method, which is not limited in this embodiment.

For ease of understanding, reference is made to FIG. 4 and FIG. 5 for explanation, but this does not limit the solution. FIG. 4 is a schematic diagram of a first surface when calculating a deviation value for a substrate according to some embodiments of the present application, and FIG. 5 is a schematic diagram of a second surface when calculating the deviation value for the substrate according to some embodiments of the present application. In FIG. 4 and FIG. 5, taking an eight-up copper foil electrode plate as an example, the black regions are active-material coating regions. In this embodiment, a deviation value for both sides of the first surface and the second surface is calculated using a dual-reference method, that is, the deviation value for both sides of the first surface and the second surface is calculated jointly using a left reference and a right reference, and the specific method is as follows: the misalignment values for the two respective left-side coating regions on the first surface and the second surface are calculated using the left reference, and the specific calculation process is: the left-side first misalignment value L1 = B1 - A1, the left-side second misalignment value L2 = B2 - A2, the left-side third misalignment value L3 = B3 - A3, and the left-side fourth misalignment value L4 = B4 - A4; the misalignment values for the two respective right-side coating regions on the first surface and the second surface are calculated using the right reference, and the specific calculation process is: the right-side first misalignment value R1 = A5 - B5, the right-side second misalignment value R2 = A6 - B6, the right-side third misalignment value R3 = A7 - B7, and the right-side fourth misalignment value R4 = A8 - B8; and the deviation value is calculated according to the left-side misalignment values and the right-side misalignment values, and the specific formula is: the deviation value P = (L1 + L2 + L3 + L4 + R1 + R2 + R3 + R4) / 8.

In this embodiment, the deviation value for both sides of the first surface and the second surface is calculated according to the first coating information of the first surface of the substrate and the second coating information of the second surface, and coating deviation correction is performed according to the deviation value. Compared to existing methods that calculate the deviation value for the substrate using a single-reference method, since this embodiment calculates a deviation value for both sides of the first surface and the second surface using a dual-reference method, the calculation error caused by the wide width of the electrode plate is thereby reduced, thus improving the deviation correction effects and enhancing the product yield rate.

In some embodiments, the coating method further includes: acquiring a first-surface dry-film image of the first surface of the substrate and a second-surface dry-film image of the second surface of the substrate; and calculating the deviation value for both sides of the first surface and the second surface according to the first-surface dry-film image and the second-surface dry-film image, and sending the deviation correction instruction to the deviation correction device according to the deviation value to cause the deviation correction device to perform coating deviation correction on the substrate according to the deviation correction instruction.

To improve the accuracy of the deviation value, in this embodiment, the deviation value for both sides of the first surface and the second surface is calculated by means of image comparison, that is, the deviation value for both sides of the first surface and the second surface is calculated according to the first-surface dry-film image and the second-surface dry-film image. Specifically, the deviation value for both sides of the first surface and the second surface may be calculated by comparing the first-surface dry-film size in the first-surface dry-film image and the second-surface dry-film size in the second-surface dry-film image.

In this embodiment, the first detector and the second detector may be CCD cameras, which are respectively configured to detect the first-surface dry-film image of the first surface of the substrate and the second-surface dry-film image of the second surface of the substrate. For specific steps of calculating the deviation value for both sides of the first surface and the second surface according to the first-surface dry-film image and the second-surface dry-film image, reference may be made to FIG. 4 and FIG. 5, which will not be repeated here.

In this embodiment, the deviation value for both sides of the first surface and the second surface is calculated by means of image comparison, that is, the deviation value for both sides of the first surface and the second surface is calculated according to the first-surface dry-film image and the second-surface dry-film image, thereby enabling improvement in the accuracy of the deviation value.

In some embodiments, the calculating the deviation value for both sides of the first surface and the second surface according to the first-surface dry-film image and the second-surface dry-film image includes: acquiring a second-surface wet-film image of the second surface of the substrate; calculating a drying compensation value according to the second-surface wet-film image and the second-surface dry-film image; and calculating the deviation value for both sides of the first surface and the second surface according to the drying compensation value, the first-surface dry-film image, and the second-surface wet-film image.

Considering the deviation correction method where the first detector and the second detector are disposed before the winding device, since the positions of the first detector and the second detector are far from the deviation correction device, the deviation correction effect can only be verified after a long travel distance, resulting in poor real-time performance of deviation correction.

Therefore, to overcome the above-mentioned defect, in this embodiment, a third detector may be additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

For ease of understanding, reference is made to FIG. 11 for explanation, but this does not limit the solution. FIG. 11 is a control logic diagram of a control device according to some embodiments of the present application. In the figure, the control logic of the control device includes the following steps:
step 10: calculating a drying compensation value according to the second-surface wet-film image and the second-surface dry-film image: comparing the second-surface wet-film size in the second-surface wet-film image and the second-surface dry-film size in the second-surface dry-film image to obtain the drying compensation value;
step 20: calculating a left-side misalignment value and a right-side misalignment value between the first surface and the second surface according to the drying compensation value, the first-surface dry-film image, and the second-surface wet-film image: where as shown in FIG. 4 and FIG. 5, the left-side first misalignment value L1 = (B1 - C) - A1, the left-side second misalignment value L2 = (B2 - C) - C, the left-side third misalignment value L3 = (B3 - C) - A3, and the left-side fourth misalignment value L4 = (B4 - C) - A4; and the misalignment values for the two respective right-side coating regions on the first surface and the second surface are calculated using the right reference, and the specific calculation process is: the right-side first misalignment value R1 = A5 - (B5 - C), the right-side second misalignment value R2 = A6 - (B6 - C), the right-side third misalignment value R3 = A7 - (B7 - C), and the right-side fourth misalignment value R4 = A8 - (B8 - C), where C is the drying compensation value;
step 30: calculating the deviation value for both sides of the first surface and the second surface according to the left-side misalignment values and the right-side misalignment values, and the specific formula is: the deviation value P = (L1 + L2 + L3 + L4 + R1 + R2 + R3 + R4) / 8; and
step 40: sending a deviation correction instruction to the deviation corrector and/or the second-surface coating device according to the deviation value to cause the deviation corrector and/or the second-surface coating device to perform coating deviation correction on the substrate according to the deviation correction instruction.

In this embodiment, a third detector is additionally provided, which is configured to detect a second-surface wet-film image of the second surface of the substrate, and calculate the deviation value for both sides of the first surface and the second surface according to the drying compensation value, the first-surface dry-film image, and the second-surface wet-film image; since the position of the first detector is moved forward to between the drying device and the second-surface coating device, and the position of the third detector is set between the second-surface coating device and the drying device, the distances between the detectors and the deviation correction device can thereby be shortened, making the detectors closer to the deviation correction device, and thus enabling shortening of the time required to verify the deviation correction effect and improvement in the real-time performance of coating deviation correction.

In some embodiments, the coating method further includes: calculating a single-frame deviation value for both sides between the first surface and the second surface according to the drying compensation value, the first-surface dry-film image, and the second-surface wet-film image, and accumulating single-frame picture heights to obtain an accumulated distance; in response to the accumulated distance satisfying a preset distance condition, calculating an average deviation value of a plurality of single-frame deviation values within the accumulated distance; calculating a deviation correction closed-loop value according to the average deviation value and a deviation correction coefficient; and in response to the deviation correction closed-loop value satisfying a preset deviation correction condition, sending the deviation correction instruction to the deviation correction device according to the deviation correction closed-loop value.

To improve the accuracy of coating deviation correction, in this embodiment, before performing deviation correction, it is also determined whether the accumulated distance of a plurality of frame picture heights satisfies a preset distance condition, and whether the deviation correction closed-loop value satisfies a preset deviation correction condition.

For ease of understanding, reference is made to FIG. 12 for explanation, but this does not limit the solution. FIG. 12 is a detailed control logic diagram of a control device according to some embodiments of the present application. In the figure, the detailed control logic of the control device includes the following steps:
step a: system startup;
step b: starting image capture by CCD1: after the system starts, when the substrate travels to the detection station corresponding to the first detector (i.e., CCD1 in the figure), the first detector detects a first-surface dry-film image of the first surface of the substrate;
step c: determining whether the start position of CCD1 has reached CCD3: i.e., it is determined whether the substrate has traveled to the detection station corresponding to the third detector (i.e., CCD3 in the figure);
step d: starting image capture by CCD3: when the substrate travels to the detection station corresponding to the third detector (i.e., CCD3 in the figure), the third detector detects a second-surface wet-film image of the second surface of the substrate;
step e: determining whether the start position of CCD3 has reached CCD2: i.e., it is determined whether the substrate has traveled to the detection station corresponding to the second detector (i.e., CCD2 in the figure);
step f: starting image capture by CCD2: when the substrate travels to the detection station corresponding to the second detector (i.e., CCD2 in the figure), the second detector detects a second-surface dry-film image of the second surface of the substrate;
step g: calculating a deviation value P: the control device calculates a drying compensation value according to the second-surface wet-film image and the second-surface dry-film image, and calculates a deviation value P for both sides of the first surface and the second surface according to the drying compensation value, the first-surface dry-film image, and the second-surface wet-film image;
step h: accumulating single-frame picture heights to obtain an accumulated distance X: in this embodiment, by accumulating the single-frame picture heights, the travel distance of the substrate in this deviation correction (i.e., the accumulated distance X) can be obtained;
step i: determining whether the accumulated distance X satisfies a set distance: if coating deviation correction is performed each time a set of images is obtained, it may lead to frequent deviation correction, affecting the product yield rate; therefore, in this embodiment, it is also necessary to determine whether the accumulated distance satisfies the set distance before performing deviation correction, where the set distance may be preset; certainly, to avoid affecting normal coating, in this embodiment, the set distance may also be set as the working distance of the coating head or the deviation correction device.
step j: accumulating single-frame picture heights to obtain a cumulative image height Y: in this embodiment, by accumulating the single-frame picture heights, the travel distance of the substrate in this deviation correction can be obtained;
step k: determining whether the cumulative image height Y satisfies a preset deviation correction distance: since the first detector and the third detector are disposed at different positions, to ensure that the first-surface dry-film image obtained by the first detector and the second-surface wet-film image obtained by the third detector are coating images of two surfaces of the same region on the substrate, in this embodiment, it is also necessary to determine whether the cumulative image height Y satisfies the preset deviation correction distance, where the preset deviation correction distance may be preset, for example, the preset deviation correction distance may be set as the distance between the first detector and the third detector;
step 1: calculating an average deviation value of a plurality of single-frame deviation values within the accumulated distance, and calculating a deviation correction closed-loop value U according to the average deviation value and a deviation correction coefficient: the deviation correction closed-loop value U = the average deviation value * the deviation correction coefficient, where the deviation correction coefficient may be preset according to actual requirements;
step m: determining whether U is within a set reasonable closed-loop value range of 0.001 mm to 2 mm;
step n: sending the deviation correction closed-loop value U to the deviation correction device for deviation correction, and receiving a deviation correction completion signal; and
step o: continuing to enter the next deviation correction cycle.

In this embodiment, before performing deviation correction, it is also determined whether the accumulated distance of a plurality of frame picture heights satisfies a preset distance condition, and whether the deviation correction closed-loop value satisfies a preset deviation correction condition, thereby enabling improvement in the accuracy of coating deviation correction.

In some embodiments, the coating method further includes: acquiring an empirical compensation value for the substrate before and after drying of the second surface; and calculating the deviation value for both sides of the first surface and the second surface according to the empirical compensation value, the first-surface dry-film image, and the second-surface wet-film image, and sending the deviation correction instruction to the deviation correction device according to the deviation value.

In order to improve coating deviation correction efficiency and reduce the cost of the coating system, in this embodiment, a deviation value for both sides of the first surface and the second surface may also be calculated according to an empirical compensation value for the substrate before and after drying of the second surface, the first-surface dry-film image, and the second-surface wet-film image, where the empirical compensation value may be preset; for example, a manager of the coating system may preset the empirical compensation value for the substrate before and after drying of the second surface according to coating experience, which is not limited in this embodiment.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A coating system, comprising: a first detector, a second detector, a control device, and a deviation correction device, wherein
the first detector is configured to detect first coating information of a first surface of a substrate;
the second detector is configured to detect second coating information of a second surface of the substrate, the first surface being one surface of the substrate, and the second surface being the other surface of the substrate;
the control device is configured to calculate a deviation value for both sides of the first surface and the second surface according to the first coating information and the second coating information, and send a deviation correction instruction to the deviation correction device according to the deviation value; and
the deviation correction device is configured to perform coating deviation correction on the substrate according to the deviation correction instruction.

2. The coating system of claim 1, further comprising: an unwinding device, a coating device, and a winding device, the coating device being disposed between the unwinding device and the winding device, and the first detector and the second detector being disposed between the coating device and the winding device, wherein
the coating device is configured to coat the first surface and the second surface of the substrate.

3. The coating system of claim 2, wherein the coating device comprises a first-surface coating device and a second-surface coating device, the first-surface coating device being disposed at an unwinding position of the unwinding device, and the second-surface coating device being disposed between the first-surface coating device and the winding device, wherein
the first-surface coating device is configured to coat the first surface of the substrate; and
the second-surface coating device is configured to coat the second surface of the substrate.

4. The coating system of claim 3, further comprising: a deviation corrector, the deviation corrector being disposed between the first-surface coating device and the second-surface coating device, and the deviation correction device being the deviation corrector and/or the second-surface coating device, wherein
the deviation corrector is configured to adjust a position of the substrate according to the deviation correction instruction to perform deviation correction on the substrate; and
the second-surface coating device is configured to coat the second surface of the substrate according to the deviation correction instruction to perform coating deviation correction on the substrate.

5. The coating system of claim 3, further comprising a drying device, the drying device being disposed between the first-surface coating device and the second-surface coating device, and also being disposed between the second-surface coating device and the winding device, wherein
the drying device is configured to dry the first surface and the second surface of the substrate.

6. The coating system of claim 5, wherein the first detector and the second detector are disposed between the drying device and the winding device, wherein
the first detector is configured to detect a first-surface dry-film image of the first surface of the substrate;
the second detector is configured to detect a second-surface dry-film image of the second surface of the substrate; and
the control device is configured to calculate the deviation value for both sides of the first surface and the second surface according to the first-surface dry-film image and the second-surface dry-film image, and send the deviation correction instruction to the deviation correction device according to the deviation value.

7. The coating system of claim 6, further comprising: a third detector, the third detector being disposed between the second-surface coating device and the drying device, the first detector being disposed between the drying device and the second-surface coating device, and the second detector being disposed between the drying device and the winding device, wherein
the third detector is configured to detect a second-surface wet-film image of the second surface of the substrate; and
the control device is configured to calculate a drying compensation value according to the second-surface wet-film image and the second-surface dry-film image, calculate the deviation value for both sides of the first surface and the second surface according to the drying compensation value, the first-surface dry-film image, and the second-surface wet-film image, and send the deviation correction instruction to the deviation correction device according to the deviation value.

8. The coating system of claim 7, wherein the control device is further configured to calculate a single-frame deviation value for both sides between the first surface and the second surface according to the drying compensation value, the first-surface dry-film image, and the second-surface wet-film image, and accumulate single-frame picture heights to obtain an accumulated distance; in response to the accumulated distance satisfying a preset distance condition, calculate an average deviation value of a plurality of single-frame deviation values within the accumulated distance; calculate a deviation correction closed-loop value according to the average deviation value and a deviation correction coefficient; and in response to the deviation correction closed-loop value satisfying a preset deviation correction condition, send the deviation correction instruction to the deviation correction device according to the deviation correction closed-loop value.

9. The coating system of claim 7, wherein the control device is further configured to acquire an empirical compensation value for the substrate before and after drying of the second surface; and calculate the deviation value for both sides of the first surface and the second surface according to the empirical compensation value, the first-surface dry-film image, and the second-surface wet-film image, and send the deviation correction instruction to the deviation correction device according to the deviation value.

10. The coating system of claim 1, wherein the first detector comprises a visual detector and/or a laser detector, and the second detector comprises a visual detector and/or a laser detector.

11. The coating system of claim 1, wherein the control device is connected to the first detector and the second detector through a bus communication method.

12. The coating system of claim 1, wherein the first surface and the second surface of the substrate comprise active-material coating regions.

13. A coating method, comprising:
detecting first coating information of a first surface of a substrate by a first detector;
detecting second coating information of a second surface of the substrate by a second detector, the first surface being one surface of the substrate, and the second surface being the other surface of the substrate; and
calculating a deviation value for both sides of the first surface and the second surface according to the first coating information and the second coating information, and sending a deviation correction instruction to a deviation correction device according to the deviation value to cause the deviation correction device to perform coating deviation correction on the substrate according to the deviation correction instruction.

14. The coating method of claim 13, further comprising:
detecting a first-surface dry-film image of the first surface of the substrate by the first detector;
detecting a second-surface dry-film image of the second surface of the substrate by the second detector; and
calculating the deviation value for both sides of the first surface and the second surface according to the first-surface dry-film image and the second-surface dry-film image, and sending the deviation correction instruction to the deviation correction device according to the deviation value to cause the deviation correction device to perform coating deviation correction on the substrate according to the deviation correction instruction.

15. The coating method of claim 14, further comprising:
calculating a left-side misalignment value and a right-side misalignment value between the first surface and the second surface according to the first-surface dry-film image and the second-surface dry-film image; and
calculating the deviation value for both sides of the first surface and the second surface according to the left-side misalignment value and the right-side misalignment value.

16. The coating method of claim 14, further comprising:
detecting a second-surface wet-film image of the second surface of the substrate by a third detector; and
calculating a drying compensation value according to the second-surface wet-film image and the second-surface dry-film image, and calculating the deviation value for both sides of the first surface and the second surface according to the drying compensation value, the first-surface dry-film image, and the second-surface wet-film image, and sending the deviation correction instruction to the deviation correction device according to the deviation value to cause the deviation correction device to perform coating deviation correction on the substrate according to the deviation correction instruction.

17. The coating method of claim 16, further comprising:
calculating a left-side misalignment value and a right-side misalignment value between the first surface and the second surface according to the drying compensation value, the first-surface dry-film image, and the second-surface wet-film image; and
calculating the deviation value for both sides of the first surface and the second surface according to the left-side misalignment value and the right-side misalignment value.

18. A coating method, comprising:
acquiring first coating information of a first surface of a substrate and second coating information of a second surface of the substrate, the first surface being one surface of the substrate, and the second surface being the other surface of the substrate; and
calculating a deviation value for both sides of the first surface and the second surface according to the first coating information and the second coating information, and sending a deviation correction instruction to a deviation correction device according to the deviation value to cause the deviation correction device to perform coating deviation correction on the substrate according to the deviation correction instruction.

19. The coating method of claim 18, further comprising:
acquiring a first-surface dry-film image of the first surface of the substrate and a second-surface dry-film image of the second surface of the substrate; and
calculating the deviation value for both sides of the first surface and the second surface according to the first-surface dry-film image and the second-surface dry-film image, and sending the deviation correction instruction to the deviation correction device according to the deviation value to cause the deviation correction device to perform coating deviation correction on the substrate according to the deviation correction instruction.

20. The coating method of claim 18, further comprising:
calculating a left-side misalignment value and a right-side misalignment value between the first surface and the second surface according to the first-surface dry-film image and the second-surface dry-film image; and
calculating the deviation value for both sides of the first surface and the second surface according to the left-side misalignment value and the right-side misalignment value.

21. The coating method of claim 19, wherein the calculating the deviation value for both sides of the first surface and the second surface according to the first-surface dry-film image and the second-surface dry-film image comprises:
acquiring a second-surface wet-film image of the second surface of the substrate;
calculating a drying compensation value according to the second-surface wet-film image and the second-surface dry-film image; and
calculating the deviation value for both sides of the first surface and the second surface according to the drying compensation value, the first-surface dry-film image, and the second-surface wet-film image.

22. The coating method of claim 21, further comprising:
calculating a left-side misalignment value and a right-side misalignment value between the first surface and the second surface according to the drying compensation value, the first-surface dry-film image, and the second-surface wet-film image; and
calculating the deviation value for both sides of the first surface and the second surface according to the left-side misalignment value and the right-side misalignment value.

23. The coating method of claim 21, further comprising:
calculating a single-frame deviation value for both sides between the first surface and the second surface according to the drying compensation value, the first-surface dry-film image, and the second-surface wet-film image, and accumulating single-frame picture heights to obtain an accumulated distance;
in response to the accumulated distance satisfying a preset distance condition, calculating an average deviation value of a plurality of single-frame deviation values within the accumulated distance; and
calculating a deviation correction closed-loop value according to the average deviation value and a deviation correction coefficient; and
in response to the deviation correction closed-loop value satisfying a preset deviation correction condition, sending the deviation correction instruction to the deviation correction device according to the deviation correction closed-loop value.

24. The coating method of claim 21, further comprising:
acquiring an empirical compensation value for the substrate before and after drying of the second surface; and
calculating the deviation value for both sides of the first surface and the second surface according to the empirical compensation value, the first-surface dry-film image, and the second-surface wet-film image, and sending the deviation correction instruction to the deviation correction device according to the deviation value.
